(19) Europäisches Patentamt
European Patent Office
Office européen des brevets

(11) **EP 4 478 473 A1**

(12) **EUROPEAN PATENT APPLICATION**
published in accordance with Art. 153(4) EPC

(43) Date of publication:
**18.12.2024 Bulletin 2024/51**

(21) Application number: **23749850.6**

(22) Date of filing: **03.02.2023**

(51) International Patent Classification (IPC):
*H01M 10/28* (2006.01)        *H01M 4/24* (2006.01)
*H01M 4/66* (2006.01)         *H01M 50/107* (2021.01)
*H01M 50/119* (2021.01)       *H01M 50/128* (2021.01)
*H01M 50/152* (2021.01)       *H01M 50/531* (2021.01)
*H01M 50/533* (2021.01)       *H01M 50/545* (2021.01)
*H01M 50/56* (2021.01)        *H01M 50/562* (2021.01)

(52) Cooperative Patent Classification (CPC):
**H01M 4/24; H01M 4/66; H01M 10/28;
H01M 50/107; H01M 50/119; H01M 50/128;
H01M 50/152; H01M 50/531; H01M 50/533;
H01M 50/545; H01M 50/56; H01M 50/562;
Y02E 60/10**

(86) International application number:
**PCT/JP2023/003525**

(87) International publication number:
**WO 2023/149534 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.02.2022 JP 2022017150**

(71) Applicant: **FDK Corporation**
**Tokyo 108-8212 (JP)**

(72) Inventors:
• **MURASE, Satoshi**
  **Tokyo 108-8212 (JP)**
• **SUZUKI, Soma**
  **Tokyo 108-8212 (JP)**
• **YAMAGUCHI, Tomomichi**
  **Tokyo 108-8212 (JP)**
• **ITO, Takeshi**
  **Tokyo 108-8212 (JP)**
• **ENDO, Takahiro**
  **Tokyo 108-8212 (JP)**

(74) Representative: **Epping - Hermann - Fischer**
**Patentanwaltsgesellschaft mbH**
**Schloßschmidstraße 5**
**80639 München (DE)**

(54) **ZINC BATTERY**

(57) A battery 1 includes an exterior can 2, an electrode group 4 housed together with an alkaline electrolyte in the exterior can 2, and a sealing member 14 that seals the exterior can 2. The electrode group 4 is formed by winding a positive electrode 6 and a negative electrode 8 stacked together with a separator 10 interposed therebetween into a spiral shape and has a columnar overall shape. A protruding negative electrode edge portion 12 that is a partially protruding portion of the negative electrode 8 is located at a lower end surface portion of the electrode group 4, and the protruding negative electrode edge portion 12 is in direct contact with the inner surface of a bottom wall 90 of the exterior can 2.

EP 4 478 473 A1

**(Cont. next page)**

# FIG. 1

## Description

Technical Field

The present invention relates to a zinc battery.

Background Art

A zinc battery is a battery that uses zinc, a zinc alloy, or a zinc-containing compound as a negative electrode active material and is one type of battery that has long been researched and developed with the spread of batteries. Examples of the battery that uses zinc etc. as the negative electrode include primary batteries, secondary batteries (storage batteries), and research and development has been conducted on, for example, zinc-air batteries that use oxygen in air as the positive electrode active material, nickel-zinc batteries that use a nickel-containing compound as the positive electrode active material, manganese-zinc batteries that use a manganese-containing compound as the positive electrode active material, zinc-ion batteries, and silver-zinc batteries that use a silver-containing compound as the positive electrode active material. In particular, zinc-air primary batteries, manganese-zinc primary batteries, and silver-zinc batteries have been commercialized and are widely used worldwide.

In recent years, batteries have been used for various portable devices and various devices for hybrid electric vehicles, and the applications of batteries are expanding. With the expansion of the applications of batteries, the importance of developing and improving batteries for various industries is increasing, and this has led to the desire to develop mainly novel secondary batteries with high manufacturability and superior battery performance and to improve the battery performance. One type of zinc battery developed under these circumstances is a battery that is dischargeable at a high rate. One known example of such a battery is a cylindrical zinc battery described below.

The zinc battery is formed by housing an electrode group and an alkaline electrolyte in a closed-end cylindrical exterior can and sealing an opening of the exterior can with a sealing member including a positive electrode terminal.

The electrode group is formed by winding positive and negative electrodes stacked with a separator therebetween into a spiral shape and has a substantially columnar overall shape. When the positive and negative electrodes are wound together, they are disposed so as to be slightly displaced from each other in a direction along the axial line of the electrode group, and the separator having a prescribed size is placed in a prescribed position between the positive and negative electrodes. With this state maintained, the positive electrode, the separator, and the negative electrode are wound together. As a result, a spirally wound edge portion of the positive electrode protrudes from one end side of the electrode group, and a spirally wound edge portion of the negative electrode protrudes from the other end side of the electrode group.

A positive electrode current collector is welded to the protruding edge portion of the positive electrode, and a negative electrode current collector is welded to the protruding edge portion of the negative electrode. In this manner, the positive electrode current collector and the positive electrode are electrically connected to each other over a wide area, and the negative electrode current collector and the negative electrode are electrically connected to each other over a wide area, so that the current collection efficiency is improved. Therefore, the battery is dischargeable at a high rate.

This cylindrical zinc battery is assembled using, for example, the following procedure. First, the electrode group is inserted into the exterior can, and the inner surface of the bottom wall of the exterior can and the negative electrode current collector are welded together. In this manner, the exterior can serving also as a negative electrode terminal is electrically connected to the negative electrode. Next, one end of a positive electrode ribbon formed of a thin metal-made plate is welded to a prescribed position of the positive electrode current collector. The other end of the positive electrode ribbon is welded to a prescribed position of the sealing member. In this manner, the positive electrode terminal and the positive electrode are electrically connected to each other. Then the sealing member is attached to an upper end opening of the exterior can with an insulating gasket interposed therebetween, and the upper end opening of the exterior can is crimped to seal the exterior can. The cylindrical zinc battery is thereby formed.

The positive electrode ribbon used is a relatively long ribbon in order to facilitate welding to the sealing member. When the sealing member is attached to the upper end opening of the exterior can, the positive electrode ribbon is housed in the exterior can so as to be bent between the sealing member and the electrode group. Therefore, the positive electrode ribbon used is relatively thin so that it can be bent easily.

In recent years, there has been a demand for higher performance zinc batteries and, particularly for the development of low self-discharge zinc batteries.

One problem with zinc batteries is that a local cell reaction occurs between zinc contained in the negative electrode and members made of metal material different from zinc such as the exterior can, the negative electrode current collector, and a negative electrode core through the alkaline electrolyte, causing self-discharge to proceed.

One conventional way to reduce the self-discharge of a zinc battery is to use a metal with a high hydrogen evolution overvoltage as the metal for the negative electrode core. When the metal with a high hydrogen evolution overvoltage is used as the metal for the negative electrode core, the local cell reaction is less likely to proceed, so that the self-discharge of the battery can be reduced.

Generally, foamed copper, perforated copper sheets, expanded copper sheets, etc. are used for the negative electrode core of the zinc battery. Copper is a material having a relatively high hydrogen evolution overvoltage and also having a high electrical conductivity and can therefore reduce the self-discharge of the zinc battery and contribute to an improvement in its discharge characteristics.

One method to further improve the effect of reducing the self-discharge of zinc batteries is to plate the foamed copper, perforated copper sheets, expanded copper sheets, etc. with tin having a higher hydrogen evolution overvoltage (see, for example, PTL 1 and PTL 2).

A nickel-plated steel sheet is generally used as the material of the exterior can and the material of the negative electrode current collector. To improve the effect of reducing the self-discharge, the nickel-plated steel sheet is further plated with tin.

Citation List

Patent Literature

PTL 1: Japanese Unexamined Patent Application Publication No. 11-026013
PTL 2: Japanese Unexamined Patent Application Publication No. 2019-139986

Summary of Invention

Technical Problem

In the above-described zinc battery dischargeable at a high rate, the edge portion of the negative electrode and the negative electrode current collector are welded together, and the negative electrode current collector and the inner surface of the bottom wall of the exterior can are welded together. In the welds formed by welding the above portions, the tin plating layer is partially lost, and the base metal such as Ni, Fe, or Cu may be exposed. When the base metal is exposed as described above, a problem may occur in that the self-discharge reducing effect of the tin plating is not obtained sufficiently.

Specifically, in the zinc battery dischargeable at a high rate, the reduction in self-discharge is still inefficient.

The present invention has been made in view of the above circumstances, and it is an object to provide a zinc battery in which self-discharge can be reduced as compared with that in conventional batteries and which is dischargeable at a high rate.

Solution to Problem

The present invention provides a zinc battery including: a closed-end cylindrical can having an opening at an upper end thereof and serving also as a negative electrode terminal; an electrode group that, together with an alkaline electrolyte, is housed in the can; and a sealing member that includes a positive electrode terminal and a sealing plate electrically connected to the positive electrode terminal, the sealing plate having a portion that is fitted into the opening to seal the opening, wherein the electrode group is formed by winding a positive electrode and a negative electrode stacked together with a separator interposed therebetween into a spiral shape and has a columnar overall shape, wherein the negative electrode includes a negative electrode substrate and a negative electrode mixture held in the negative electrode substrate, wherein the negative electrode mixture contains at least one of zinc, a zinc alloy, and a zinc-containing compound, wherein a protruding negative electrode edge portion that is a partially protruding portion of the negative electrode is located at a lower end surface portion of the electrode group that is located on a bottom side of the can, and wherein the protruding negative electrode edge portion is in direct contact with an inner surface of a bottom of the can.

Advantageous Effects of Invention

The zinc battery of the invention includes: the closed-end cylindrical can having the opening at the upper end thereof and serving also as the negative electrode terminal; the electrode group that, together with the alkaline electrolyte, is housed in the can; and the sealing member that includes the positive electrode terminal and the sealing plate electrically connected to the positive electrode terminal, the sealing plate having a portion that is fitted into the opening to seal the opening. The electrode group is formed by winding the positive electrode and the negative electrode stacked together with the separator interposed therebetween into a spiral shape and has a columnar overall shape. The negative electrode includes the negative electrode substrate and the negative electrode mixture held in the negative electrode substrate. The negative electrode mixture contains at least one of zinc, a zinc alloy, and a zinc-containing compound. The protruding negative electrode edge portion that is a partially protruding portion of the negative electrode is located at the lower end surface portion of the electrode group that is located on the bottom side of the can. The protruding negative electrode edge portion is in direct contact with the inner surface of the bottom of the can. In the zinc battery of the invention having the structure described above, the self-discharge can be reduced as compared with that in conventional batteries, and the zinc battery is dischargeable at a high rate.

Brief Description of Drawings

[Fig. 1] A cross-sectional view showing a nickel-zinc secondary battery according to an embodiment.
[Fig. 2] A plan view showing a positive electrode current collector.
[Fig. 3] A perspective view showing a current collecting lead with its top wall side facing up.
[Fig. 4] A cross-sectional view showing an exterior can housing an electrode group to which a positive electrode current collector is welded, the current collecting lead to be inserted into the exterior can, and a sealing member to be fitted into an opening of the exterior can.
[Fig. 5] A graph showing the relation between the number of times a battery is dropped and the value of AC resistance in a drop test.
[Fig. 6] A photograph showing a CT image of a battery in Comparative Example 2 after the second drop in the drop test.

Description of Embodiments

A nickel-zinc secondary battery (hereinafter may be denoted also as a battery) 1 according to an embodiment will be described with reference to the drawings.

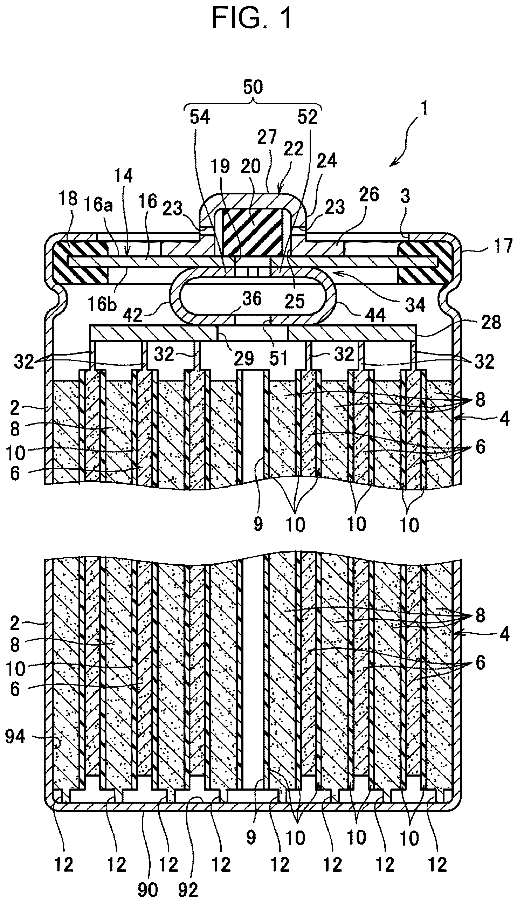

The battery 1 is, for example, a 4/3FA size cylindrical battery. More particularly, as shown in FIG. 1, the battery 1 includes a closed-end cylindrical can (exterior can) 2 having an opening at the top end. The exterior can 2 has electrical conductivity, and its bottom wall 90 functions as a negative electrode terminal. No particular limitation is imposed on the material of the exterior can 2, but preferred examples of the material include a nickel-plated steel sheet prepared by plating a thin steel sheet corresponding to a so-called SPCC (cold-rolled steel sheet) with Ni to a thickness of 2 $\mu$m. More preferably, a multilayer plated steel sheet prepared by further plating the nickel-plated steel sheet with tin is used. An electrode group 4, together with a prescribed amount of an alkaline electrolyte (not illustrated), is housed in the exterior can 2.

As shown in FIG. 1, the opening 3 of the exterior can 2 is closed by a sealing member 14. The sealing member 14 includes an electrically conductive disk-shaped lid plate 16, a valve element 20 disposed on the lid plate 16, and a positive electrode terminal 22 disposed also on the lid plate 16.

A ring-shaped insulating gasket 18 is disposed on the outer circumferential portion of the lid plate 16 so as to surround the lid plate 16, and the insulating gasket 18 and the lid plate 16 are fixed to an opening edge 17 of the exterior can 2 by crimping the opening edge 17 of the exterior can 2. Specifically, the lid plate 16 and the insulating gasket 18 cooperate to seal the opening 3 of the exterior can 2.

The lid plate 16 has a discharge hole 19 at the center, and the rubber-made valve element 20 is disposed on an outer surface 16a of the lid plate 16 so as to close the discharge hole 19.

Moreover, the positive electrode terminal 22 is electrically connected to the outer surface 16a of the lid plate 16 so as to cover the valve element 20.

The positive electrode terminal 22 has a cylindrical circumferential wall 24, an opening 25 located at one end of the circumferential wall 24, a flange 26 disposed at the circumferential edge of the opening 25, and an end wall 27 located at the other end on the opposite side of the opening 25. The positive electrode terminal 22 presses the valve element 20 toward the lid plate 16. The positive electrode terminal 22 has gas vents 23 in the circumferential wall 24.

Under normal conditions, the discharge hole 19 is hermetically sealed by the valve element 20. However, when gas is generated inside the exterior can 2 and the gas pressure increases, the valve element 20 is compressed by the gas pressure, and the discharge hole 19 is opened. In this case, the gas is discharged from the exterior can 2 to the outside through the discharge hole 19 and the gas vents 23 of the positive electrode terminal 22. Specifically, the discharge hole 19, the valve element 20, and the gas vents 23 of the positive electrode terminal 22 form a safety valve of the battery 1.

The electrode group 4 includes a strip-shaped positive electrode 6, a strip-shaped negative electrode 8, and a strip-shaped separator 10, and they are wound into a spiral shape with the separator 10 interposed between the positive electrode 6 and the negative electrode 8. Specifically, the positive electrode 6 and the negative electrode 8 are stacked with the separator 10 interposed therebetween. The electrode group 4 has a columnar overall shape. A part (the outermost circumferential portion) of the negative electrode 8 forms the outermost circumferential surface of the electrode group 4. Specifically, the separator 10 is not present at the outermost circumferential surface of the electrode group 4, and the negative electrode 8 is exposed to the outside.

In the electrode group 4, a spirally wound edge portion of the positive electrode 6 protrudes from one end, and a spirally wound edge portion of the negative electrode 8 protrudes from the other end. The protruding edge portion of the positive electrode 6 is referred to as a protruding positive electrode edge portion 32, and the protruding edge portion of the negative electrode 8 is referred to as a protruding negative electrode edge portion 12. A positive electrode current collector 28 described later is welded to the protruding positive electrode edge portion 32.

The positive electrode 6 includes an electrically conductive positive electrode core having a porous structure and a positive electrode mixture held in the positive electrode core. The positive electrode core described above is, for example, a nickel-made metallic body having a three-dimensional mesh-shaped skeleton. The skeleton of the metallic body extends over the entire positive electrode core, and void spaces in the skeleton form communication holes. The communication holes are filled with the positive electrode mixture. The metallic body used may be, for example, foamed nickel.

The positive electrode mixture contains a positive electrode active material, a positive electrode additive, and a binder. The binder functions to bind the positive electrode active material and the positive electrode additive to each other and to bind the positive electrode active material and the positive electrode additive to the positive electrode core. Examples of the binder include hydrophilic and hydrophobic polymers.

The positive electrode active material used is nickel hydroxide. The nickel hydroxide used is in the form of powder. Specifically, a nickel hydroxide powder formed of aggregates of nickel hydroxide particles is used. The nickel hydroxide particles used are preferably high-valent nickel hydroxide particles.

Preferably, the nickel hydroxide particles contain Co, Zn, Cd, etc. as solutes.

In a preferred mode, the surfaces of the nickel hydroxide particles are covered with a surface layer containing a cobalt compound. Preferably, the surface layer used is a high-valent cobalt compound layer containing a trivalent or higher-valent cobalt compound.

The high-valent cobalt compound layer has high electric conductivity and forms an electrically conductive network. The high-valent cobalt compound layer used is preferably a layer containing a cobalt compound such as trivalent or higher-valent cobalt oxyhydroxide (CoOOH).

Examples of the positive electrode additive include yttrium oxide. It is also preferable to use a cobalt compound such as cobalt oxide, metallic cobalt, or cobalt hydroxide, a zinc compound such as metallic zinc, zinc oxide, or zinc hydroxide, a rare earth compound such as erbium oxide, etc.

The positive electrode 6 can be produced, for example, as follow.

First, the positive electrode additive, water, and the binder are added to the positive electrode active material powder, which is aggregates of the positive electrode active material particles obtained as described above, and the mixture is kneaded to prepare a positive electrode mixture slurry. The resulting positive electrode mixture slurry is filled into, for example, foamed nickel and then subjected to drying treatment. After the drying treatment, the foamed nickel filled with the nickel hydroxide particles etc. is rolled between rolls and then cut. An intermediate product of the positive electrode is thereby obtained. The intermediate product of the positive electrode has a rectangular overall shape. The positive electrode mixture is removed from a prescribed edge portion of the intermediate product of the positive electrode that is to become the protruding positive electrode edge portion 32, and the positive electrode substrate is exposed at the edge portion. The edge portion from which the positive electrode mixture has been removed is then compressed in the thickness direction of the intermediate product of the positive electrode to thereby form the protruding positive electrode edge portion 32. Through the above compression process, the positive electrode substrate becomes dense, and therefore the protruding positive electrode edge portion 32 can be easily weldable. In some cases, a Ni-plated thin steel sheet is joined to the protruding positive electrode edge portion 32 in order to improve the weldability of the protruding positive electrode edge portion 32. The positive electrode 6 having the protruding positive electrode edge portion 32 is obtained in the manner described above. No particular limitation is imposed on the method for removing the positive electrode mixture. For example, a method that uses ultrasonic vibrations to remove the positive electrode mixture is preferably used. Regions other than the protruding positive electrode edge portion 32 are still filled with the positive electrode mixture.

Next, the negative electrode 8 will be described.

The negative electrode 8 includes an electrically conductive strip-shaped negative electrode substrate, and a negative electrode mixture is held in the negative electrode substrate.

The negative electrode substrate includes a strip-shaped metal-made core and a thin tin film covering the core. The core used is a metal material having a large number of through holes, and examples thereof include foamed copper, perforated copper sheets, and expanded copper sheets. Examples of the thin tin film include tin plating films and tin deposited films.

The negative electrode mixture is not only filled into the through holes in the negative electrode substrate but also formed as layers held on the opposite surfaces of the negative electrode substrate.

The negative electrode mixture contains a negative electrode active material, a negative electrode additive, and a binder.

The negative electrode active material contains at least one of zinc, a zinc alloy, and a zinc-containing compound. Preferably, raw materials forming the zinc alloy are zinc and another material such as bismuth, aluminum, indium, etc. Examples of the zinc-containing compound include zinc oxide (Class 1 / Class 2 / Class 3), zinc hydroxide, zinc sulfide, tetrahydroxozincate ion salts, zinc halides, zinc carboxylate compounds such as zinc acetate, zinc tartrate, and zinc oxalate, magnesium zincate, calcium zincate, barium zincate, zinc borate, zinc silicate, zinc aluminate, zinc fluoride, zinc carbonate, zinc hydrogen carbonate, zinc nitrate, and zinc sulfate.

The negative electrode active material used is in the form of powder. Specifically, a negative electrode active material powder, which is aggregates of negative electrode active material particles, is used. No particular limitation is imposed on the particle diameter of the negative electrode active material particles. When zinc or a zinc alloy is used, the average particle diameter is preferably 10 to 1000 $\mu$m. When a zinc-containing compound is used, the average particle diameter is preferably 0.1 to 100 $\mu$m. In the present description, the average particle diameter is an average particle diameter at a cumulative mass of 50% and is determined using a particle diameter distribution measurement apparatus by a laser diffraction-scattering method.

The negative electrode additive functions to improve the characteristics of the negative electrode. Examples of the negative electrode additive include bismuth oxide, bismuth hydroxide, indium oxide, indium hydroxide, potassium oxalate, and hydrates thereof.

The binder functions to bind the negative electrode active material, the negative electrode additive, etc. to each other and to bind the negative electrode active material, the negative electrode additive, etc. to the negative electrode core. Examples of the binder include hydroxypropyl cellulose, carboxymethyl cellulose, polyvinyl alcohol, polyvinylpyrrolidone, polyacrylic acid, sodium polyacrylate, polyimide, polyamide-imide, polyamide, styrene-butadiene rubber, polyethylene oxide, polytetrafluoroethylene, polyvinylidene fluoride, perfluoroalkoxy fluorocarbon resins, and tetrafluoroethylene-hexafluoropropylene copolymers. It is preferable to add at least one of them. In particular, styrene-butadiene rubber is preferably used because of its high binding effect. The binder functions also as a thickener that imparts appropriate viscosity when a negative electrode mixture paste described later is prepared.

The negative electrode 8 can be produced, for example, as follows.

First, the negative electrode active material powder, which is aggregates of particles of the negative electrode active material (such as zinc), the negative electrode additive, the binder, and water are kneaded to prepare a negative electrode mixture paste. The negative electrode mixture paste obtained is applied to the negative electrode substrate and subjected to drying treatment. After the drying, the negative electrode substrate holding the negative electrode active material powder, the negative electrode additive, etc. is rolled between rolls and cut. An intermediate product of the negative electrode is thereby obtained. The intermediate product of the negative electrode has a rectangular overall shape. The negative electrode mixture is removed from a prescribed edge portion of the intermediate product of the negative electrode that is to become the protruding negative electrode edge portion 12. The prescribed edge portion thereby becomes the protruding negative electrode edge portion at which the negative electrode substrate is exposed. In this manner, the negative electrode 8 having the protruding negative electrode edge portion 12 is obtained. No particular limitation is imposed on the method for removing the negative electrode mixture. For example, a method that uses ultrasonic vibrations to remove the negative electrode mixture is preferably used. Regions other than the protruding negative electrode edge portion 12 are still filled with the negative electrode mixture.

The separator 10 used may be, for example, a nonwoven fabric made of polyamide fibers with hydrophilic functional groups added thereto or a nonwoven fabric made of polyolefin fibers such as polyethylene or polypropylene fibers with hydrophilic functional groups added thereto. It is preferable to use, for example, a nonwoven fabric composed mainly of polyolefin fibers and subjected to sulfonation treatment to add sulfone groups. The sulfone groups are added by treating the nonwoven fabric with sulfuric acid or an acid containing a sulfate group such as fuming sulfuric acid. A battery that uses a separator containing such fibers having sulfone groups exhibits good self-discharge characteristics. More preferably, a polyolefin-based porous film subjected to hydrophilizing treatment is layered on the nonwoven fabric to form a double-layer separator. In this manner, the occurrence of an internal short-circuit can be prevented, and the short-circuit resistance can be further improved.

The thus-produced positive and negative electrodes 6 and 8 are wound into a spiral shape with the separator 10 interposed therebetween, and the electrode group 4 is thereby formed. More particularly, before the winding operation, the positive electrode 6 and the negative electrode 8 are disposed so as to be slightly displaced from each other in a direction along the axial direction of the electrode group 4. The separator 10 with a prescribed size is placed in a prescribed position between the positive electrode 6 and the negative electrode 8, and the winding operation is performed with this state maintained. The columnar electrode group 4 is thereby obtained. The electrode group 4 obtained has the following structure. On one end side of the electrode group 4, the protruding positive electrode edge portion 32 of the positive electrode 6 protrudes beyond the negative electrode 8 adjacent thereto with the separator 10 interposed therebetween. On the other end side of the electrode group 4, the protruding negative electrode edge portion 12 of the negative electrode 8 protrudes beyond the positive electrode 6 adjacent thereto with the separator 10 interposed therebetween.

The electrode group 4 is formed by winding the positive electrode 6, the negative electrode 8, and the separator 10 around a winding core having a prescribed outer diameter. After the winding operation, the winding core is pulled out, so that a center through hole 9 passing through the electrode group 4 is formed at the center of the electrode group 4.

In the electrode group 4 described above, the positive electrode current collector 28 is connected to the protruding positive electrode edge portion 32 that forms one end portion of the columnar shape of the electrode group 4.

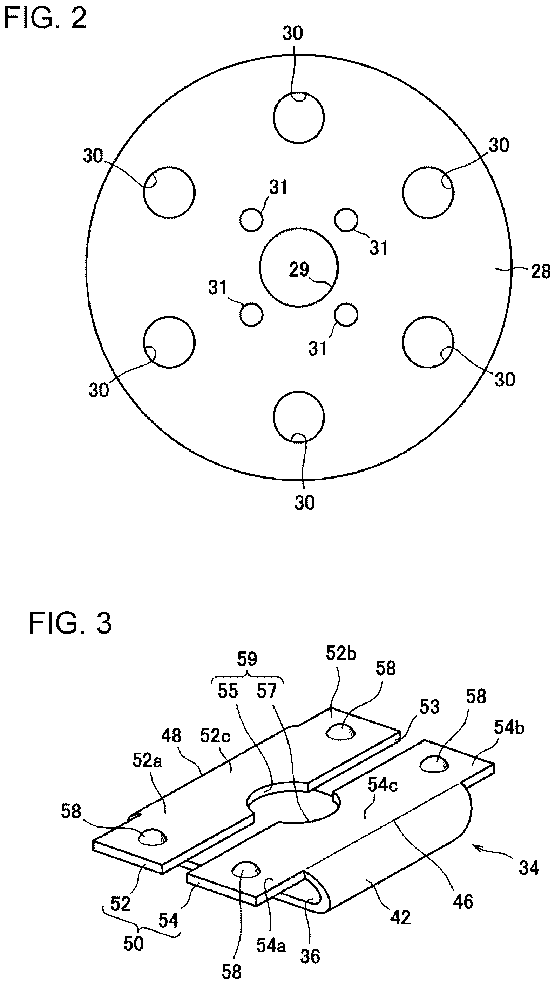

No particular limitation is imposed on the positive electrode current collector 28. For example, as shown in FIG. 2, a metal plate having a circular shape in plan view is used. More particularly, the positive electrode current collector 28 is a thin plate having a circular overall shape and includes a circular current collector center through hole 29 at the center and six through holes 30 formed so as to surround the current collector center through hole 29. The through holes 30 are formed by a punching process, and it is preferable that protrusions (burrs) extending downward (toward the electrode group 4) are formed at the edges of the through holes 30. Moreover, it is preferable that current collector protrusions 31 protruding toward the side opposite to the electrode group 4 are formed by punch pressing at prescribed positions around the current collector center through hole 29. No particular limitation is imposed on the number of current collector protrusions 31, but it is preferable to provide, for example, four current collector protrusions 31 as shown in FIG. 2.

The prepared positive electrode current collector 28 is welded to the protruding positive electrode edge portion on one end side of the electrode group 4. No particular limitation is imposed on the material of the positive electrode current collector 28. Preferred examples of the material include a Ni-plated steel sheet prepared by plating a thin steel sheet corresponding to a so-called SPCC (cold rolled steel sheet) with Ni to a thickness of 2 $\mu$m.

As shown in FIG. 1, in the battery 1, a current collecting lead 34 is interposed between the positive electrode current collector 28 and the sealing member 14. The current collecting lead 34 electrically connects the positive electrode current collector 28 connected to the positive electrode 6 of the electrode group 4 to the sealing member 14 including the positive electrode terminal 22.

As is clear from FIG. 1, the current collecting lead 34 includes a top wall 50 connected to the lid plate 16 of the sealing member 14, a bottom wall 36 connected to the positive electrode current collector 28, and a pair of side walls 42 and 44 present between opposite edges 46 and 48 of the top wall 50 and opposite edges 38 and 40 of the bottom wall 36, respectively.

No particular limitation is imposed on the material of the current collecting lead 34. Preferred examples of the material include a Ni-plated steel sheet prepared by plating a thin steel sheet corresponding to a so-called SPCC (cold rolled steel sheet) with Ni to a thickness of 2 $\mu$m.

The current collecting lead 34 will be described in detail with reference to FIG. 3. In FIG. 3, the top wall 50 is disposed on the upper side, and the bottom wall 36 is disposed on the lower side.

As is clear from FIG. 3, the top wall 50 is located at a position facing the bottom wall 36 and has a rectangular overall shape. More particularly, the top wall 50 is divided by a top wall slit 53 extending in the long-side direction at the center with respect to the short-side direction. Specifically, the top wall 50 includes a first divided half 52 and a second divided half 54.

More particularly, these first and second divided halves 52 and 54 include opposed portions 52c and 54c opposed to the bottom wall 36 and extending portions 52a, 52b, 54a, and 54b extending from the opposed portions 52c and 54c in the longitudinal direction of the top wall 50.

A first semicircular notch 55 having a semicircular shape and facing the top wall slit 53 is provided at the center of the opposed portion 52c of the first divided half 52. A second semicircular notch 57 having a semicircular shape and facing the top wall slit 53 is provided at the center of the opposed portion 54c of the second divided half 54. These first and second semicircular notches 55 and 57 are located at positions opposed to each other and together form a top wall through hole 59 having a substantially circular overall shape. The top wall through hole 59 conforms to the discharge hole 19 of the lid plate 16 when the current collecting lead 34 is joined to the sealing member 14.

A lead protrusion 58 protruding toward the sealing member 14 is provided in each of the extending portions 52a, 52b, 54a, and 54b. The lead protrusions 58 are used as portions where welding current is concentrated during resistance welding. Specifically, during the resistance welding, with the current collecting lead 34 pressed toward the sealing member 14 so that the lead protrusions 58 are pressed against the lid plate 16, the current is caused to flow. In this case, a large current flows in a concentrated manner through the contact portions between the lid plate 16 and the lead protrusions 58, and these portions are heated, melted, and deformed. Welds are thereby formed, and the current collecting lead 34 is welded to the sealing member 14.

The lead protrusions 58 are formed, for example, by punch pressing.

These extending portions 52a, 52b, 54a, and 54b extend outward from the opposed portions 52c and 54c opposed to the bottom wall 36 so as not to overlap the bottom wall 36. This allows an electrode rod of a resistance welder to come into contact with the extending portions 52a, 52b, 54a, and 54b without interference with the bottom wall 36 when the current collecting lead 34 is resistance-welded to the sealing member 14. Since the extending portions 52a, 52b, 54a, and 54b extend outward from the opposed portions 52c and 54c opposed to the bottom wall 36, the extending portions 52a, 52b, 54a, and 54b function to increase the stability of the current collecting lead 34 after the current collecting lead 34 is joined to the sealing member 14.

As shown in FIG. 3, the side walls 42 and 44 extend from the opposite edges 46 and 48 of the top wall 50 to the opposite edges 38 and 40 of the bottom wall 36. No particular limitation is imposed on the shape of the side walls 42 and 44 in plan view. The side walls 42 and 44 can have any shape such as a rectangular shape or a trapezoidal shape.

Preferably, the side walls 42 and 44 each have a curved shape protruding outward in order to facilitate the deformation of the current collecting lead 34 when a compressive load is applied thereto.

The bottom wall 36 has a square overall shape in plan view. A circular bottom wall through hole 51 is provided in a central portion of the bottom wall 36. The bottom wall through hole 51 is provided so as not to obstruct the supply of the alkaline electrolyte to the electrode group 4 when the alkaline electrolyte is injected into the exterior can 2. When the positive electrode current collector 28 and the current collecting lead 34 are combined together, the current collector center through hole 29 and the bottom wall through hole 51 are aligned with each other.

When the current collecting lead 34 is formed, it is not always necessary to form the top wall slit 53. The first divided half 52 and the second divided half 54 may be connected to each other.

Next, an example of the assembly procedure of the battery 1 will be described.

First, the electrode group 4 described above is prepared. Then the prepared electrode group 4 is inserted into the exterior can 2. The electrode group 4 is pressed against the bottom wall of the exterior can 2, so that the protruding negative electrode edge portion 12 is brought into direct contact with a bottom wall inner surface 92 of the exterior can 2. Since the negative electrode 8 is located at the outermost circumferential surface of the electrode group 4, a side wall inner circumferential surface 94 of the exterior can 2 comes into contact with the outermost circumferential portion of the negative electrode 8 of the electrode group 4. In this manner, the exterior can 2 serving also as the negative electrode terminal is electrically connected to the negative electrode 8 at the bottom wall inner surface 92 and the side wall inner circumferential surface 94.

Next, the positive electrode current collector 28 is placed on one end side of the electrode group 4, and the protruding positive electrode edge portion 32 of the electrode group 4 and the positive electrode current collector 28 are resistance-welded together. In this case, the current is concentrated at portions at which the burrs of the through holes 30 of the positive electrode current collector 28 are in contact with the protruding positive electrode edge portion 32, and welds are thereby formed. The protruding positive electrode edge portion 32 of the positive electrode 6 and the positive electrode current collector 28 are thereby welded together.

Next, a prescribed amount of the alkaline electrolyte is injected into the exterior can 2. The alkaline electrolyte injected into the exterior can 2 is held in the electrode group 4. Specifically, most of the alkaline electrolyte is held in the separator 10. The alkaline electrolyte allows the electrochemical reaction (charge-discharge reaction) between the positive electrode 6 and the negative electrode 8 to proceed during charging and discharging. The alkaline electrolyte used is preferably an aqueous solution containing at least one of KOH, NaOH, and LiOH as a solute. No particular limitation is imposed on the concentration of the alkaline electrolyte, and the concentration is, for example, 6N to 7N. Moreover, since the battery 1 is a nickel-zinc secondary battery, it is preferable to use an alkaline electrolyte containing zinc oxide dissolved to a saturated concentration. In this case, dissolution of zinc from the negative electrode into the alkaline electrolyte can be prevented.

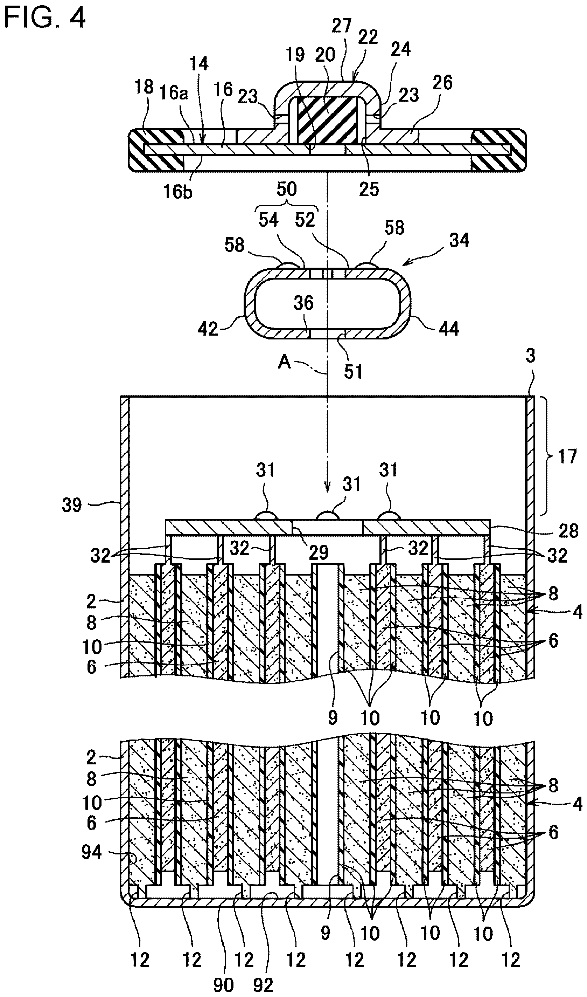

Next, as indicated by an arrow A in FIG. 4, the current collecting lead 34 is inserted into the exterior can 2 and placed on the positive electrode current collector 28.

Moreover, the sealing member 14 is prepared. In the sealing member 14, the ring-shaped insulating gasket 18 is fitted to the circumferential edge of the lid plate 16 in advance. Then the sealing member 14 with the insulating gasket 18 fitted thereto is fitted into the opening edge 17 of the exterior can 2 and placed on the current collecting lead 34, as shown by the arrow A in FIG. 4.

As described above, with the positive electrode current collector 28, the current collecting lead 34, and the sealing member 14 in contact with each other, a current is applied to perform resistance welding (projection welding) while the sealing member 14 and the positive electrode current collector 28 are pressurized in a direction in which they approach each other. In this case, the current collector protrusions 31 of the positive electrode current collector 28 are in contact with the bottom wall 36 of the current collecting lead 34, and the current is concentrated at the contact portions, so that welds are formed. The positive electrode current collector 28 and the bottom wall 36 of the current collecting lead 34 are thereby welded together. In addition, the current is concentrated at the contact portions between the lead protrusions 58 of the current collecting lead 34 and the inner surface 16b of the lid plate 16 of the sealing member 14, and welds are formed. The sealing member 14 and the current collecting lead 34 are thereby welded together.

When the welding is completed, the lid plate 16 of the sealing member 14 is located at the upper end opening of the exterior can 2 with the insulating gasket 18 interposed therebetween. Then, with this state maintained, the opening edge 17 of a circumferential wall 39 of the exterior can 2 is crimped at a position in a prescribed range from the opening 3. The sealing member 14 is thereby fixed to the opening 3 of the exterior can 2, and the opening 3 of the exterior can 2 is sealed. In this manner, the battery 1 shown in FIG. 1 is obtained. The battery 1 obtained is subjected to initial activation treatment and is ready for use.

As a result of the welding and crimping operations described above, the side walls 42 and 44 of the current collecting lead 34 are preferentially deformed, and the slightly flattened current collecting lead 34 is present between the sealing member and the electrode group 4. Therefore, the electrode group 4 is pressed against the bottom wall 90 of the exterior can 2 by the current collecting lead 34, and a good contact state is maintained between the protruding negative electrode edge portion 12 and the exterior can 2, so that electrical connection is established between the negative electrode 8 and the negative electrode terminal (the exterior can 2). When good contact can be maintained between the protruding negative electrode edge portion 12 and the exterior can 2, the following advantages can be obtained. First, discharge can be performed at a high rate. Second, the negative electrode current collector can be omitted. When the negative electrode current collector can be omitted, welding the negative electrode current collector to the protruding negative electrode edge portion 12 and welding the negative electrode current collector to the bottom wall of the exterior can can be omitted. Therefore, the progress of self-discharge due to the base metal exposed as a result of the welding can be prevented.

When a conventional positive electrode ribbon is used, the electrode group 4 cannot be pressed, so that the electrode group 4 may move inside the exterior can 2 when the battery is subjected to a shock. If the electrode group 4 moves, the electrical connection may be disturbed. In this case, the internal resistance increases, and discharge cannot be performed at a high rate. To avoid the above problem, a negative electrode current collector may be used. In this case, the protruding negative electrode edge portion is welded to the negative electrode current collector, and the negative electrode current collector is welded to the bottom wall of the exterior can 2. However, as a result of the welding, the base metal is exposed at the welds, and the self-discharge problem due to the local cell reaction occurs.

In the battery 1 according to the present embodiment, the negative electrode current collector that requires welding that causes self-discharge can be omitted. Therefore, the self-discharge can be reduced, and good electrical connection can be maintained, so that good high-rate discharge characteristics are obtained.

EXAMPLES

1. Production of battery

(EXAMPLE 1)

(1) Production of positive electrode

50.0 Parts by mass of water containing 0.5 parts by mass of yttrium oxide powder, 0.3 parts by mass of niobium oxide powder, 0.5 parts by mass of zinc oxide powder, and 0.2% by mass of hydroxypropyl cellulose powder used as a binder was added to 100 parts by mass of a cobalt-coated nickel hydroxide powder prepared as the positive electrode active material, and the mixture was kneaded to prepare a positive electrode mixture slurry.

Next, the positive electrode mixture slurry was filled into a sheet of foamed nickel used as the positive electrode core. The foamed nickel used has a surface density (basis weight) of about 350 g/m$^2$, a porosity of 95%, and a thickness of 1.3 mm.

Next, the foamed nickel filled with the positive electrode mixture slurry was subjected to drying treatment. Then the entire foamed nickel filled with the positive electrode mixture was rolled and cut into a prescribed size to thereby obtain an intermediate product of the positive electrode 6 for the 4/3FA size. A prescribed edge portion of the intermediate product of the positive electrode 6 that was to become the protruding positive electrode edge portion 32 was subjected to ultrasonic vibrations to remove the positive electrode mixture so that the positive electrode core material was exposed. Next, the edge portion from which the positive electrode mixture had been removed was compressed in the thickness direction of the intermediate product of the positive electrode 6 to form the protruding positive electrode edge portion 32. The positive electrode 6 having the protruding positive electrode edge portion 32 was thereby obtained. The positive electrode capacity of the positive electrode 6 is 2000 mAh.

(2) Production of negative electrode

100 Parts by mass of zinc oxide powder, 25 parts by mass of zinc powder, 3 parts by mass of bismuth oxide powder, 0.1 parts by mass of indium oxide powder, 2 parts by mass of potassium oxalate monohydrate powder, 1 part by mass of hydroxypropyl cellulose powder, 8 parts by mass of a water dispersion of styrene-butadiene rubber (50% solution), and 100 parts by mass of water were added, and the mixture was kneaded in a 25°C environment to prepare a negative electrode mixture paste.

The average particle diameter of zinc oxide particles included in the zinc oxide powder was 0.75 $\mu$m, and the average particle diameter of particles included in the zinc powder was 75 $\mu$m.

The negative electrode substrate was produced as follows. First, a perforated copper sheet was prepared as the core of the negative electrode substrate. The perforated copper sheet has a thickness of 60 $\mu$m, and a large number of round holes having a diameter of 1.5 mm are formed in a staggered manner. Next, the perforated copper sheet was electroplated with tin by a conventional method. In this case, the thickness of the tin plating film was set to 5.0 $\mu$m. A negative electrode substrate formed of the perforated copper sheet having the tin plating film was thereby obtained.

The negative electrode mixture paste obtained as described above was uniformly applied to both sides of the negative electrode substrate so as to have a uniform thickness.

The negative electrode mixture paste was dried, and then the negative electrode substrate holding the negative electrode mixture was rolled and cut into a prescribed size to thereby obtain an intermediate product of the negative electrode 8 for the 4/3FA size. A prescribed edge portion of the obtained intermediate product of the negative electrode 8 that was to become the protruding negative electrode edge portion 12 was subjected to ultrasonic vibrations to remove the negative electrode mixture, and the edge portion with the negative electrode substrate exposed thereat was used as the protruding negative electrode edge portion 12. The negative electrode 8 having the protruding negative electrode edge portion 12 was thereby obtained.

(3) Production of electrode group

The thus-obtained positive electrode 6 and the thus-obtained negative electrode 8 were wound into a spiral shape with the separator 10 interposed therebetween to produce the electrode group 4. More particularly, before the winding operation, the positive electrode 6 and the negative electrode 8 were disposed so as to be slightly displaced from each other in the direction along the axial line of the electrode group 4. The separator 10 was placed in a prescribed position between the positive electrode 6 and the negative electrode 8, and the winding operation was performed with this state maintained. The electrode group 4 having the center through hole 9 and having a columnar overall shape was thereby obtained. The electrode group 4 obtained has the following form. On one end side of the electrode group 4, the protruding positive electrode edge portion 32 of the positive electrode 6 protrudes beyond the negative electrode 8 adjacent thereto with the separator 10 interposed therebetween. On the other end side of the electrode group 4, the protruding negative electrode edge portion 12 of the negative electrode 8 protrudes beyond the positive electrode 6 adjacent thereto with the separator 10 interposed therebetween. The separator 10 is not present at the outermost circumferential surface of the electrode group 4, and the negative electrode 8 is located at the outermost circumferential surface. Specifically, the negative electrode 8 is exposed at the outermost circumferential surface of the electrode group 4.

The separator 10 used for the production of the electrode group 4 has a two-layer structure in which a polyolefin fiber-made nonwoven base fabric subjected to sulfonation treatment and a polypropylene-made microporous film subjected to hydrophilic treatment are stacked together. The thickness of the separator 10 was 0.16 mm (basis weight: 74 g/m$^2$).

(4) Production of positive electrode current collector

A Ni-plated steel sheet produced by plating a thin steel sheet (thickness: 0.4 mm) corresponding to a so-called SPCC (cold rolled steel sheet) with Ni to a thickness of 2 $\mu$m was prepared as the material of the positive electrode current collector. A disk having a diameter of 15.0 mm was punched from the Ni plated steel sheet. In this case, as shown in FIG. 2, the current collector center through hole 29 was formed at the center of the disk, and six through holes 30 were formed at prescribed positions around the current collector center through hole 29. These holes were formed at the same time the disk was punched. The current collector protrusions 31 were formed around the current collector center through hole 29 by punch pressing. The positive electrode current collector 28 was thereby obtained.

(5) Production of current collecting lead

A Ni-plated steel sheet produced by plating a thin steel sheet (thickness: 0.3 mm) corresponding to a so-called SPCC (cold rolled steel sheet) with Ni to a thickness of 2 $\mu$m was prepared as the material of the current collecting lead 34. The Ni-plated steel sheet was machined to produce the current collecting lead 34 shown in FIG. 3.

The maximum width W1 of the side walls 42 and 44 is 8.18 mm, and the height L1 of the side walls 42 and 44 is 3.46 mm. The length L2 of an edge of the bottom wall 36 extending between the side walls 42 and 44 is 6.4 mm, and the length L3 of each of the first divided half 52 and the second divided half 54 is 3.1 mm. The length W2 of an edge of the bottom wall 36 adjacent to the side wall 42 is 7.5 mm, and the length W3 of each of the first divided half 52 and the second divided half 54 in the longitudinal direction is 12.4 mm. The radius of each of the bottom wall through hole 51, the first semicircular notch 55, and the second semicircular notch 57 is 1.5 mm. The side walls 42 and 44 each have a trapezoidal shape in plan view.

(6) Assembly of nickel-zinc secondary battery

The prepared electrode group 4 was housed in the exterior can 2. In this case, the negative electrode 8 was located at the outermost circumferential surface of the electrode group 4. The outermost circumferential portion was in contact with the side wall inner circumferential surface 94 of the exterior can 2, and the negative electrode 8 and the negative electrode terminal (the exterior can 2) were thereby electrically connected to each other. The electrode group 4 was further pressed into the exterior can 2, and the protruding negative electrode edge portion 12 located on the other end side of the electrode group 4 was brought into direct contact with the bottom wall inner surface 92 of the exterior can 2. In this manner, the negative electrode 8 was electrically connected to the negative electrode terminal (the exterior can 2) via the protruding negative electrode edge portion 12.

Next, the positive electrode current collector 28 was placed on the one end side of the electrode group 4, and the protruding positive electrode edge portion 32 of the electrode group 4 and the positive electrode current collector 28 were resistance-welded together. In this case, the current was concentrated at portions at which the burrs of the through holes 30 of the positive electrode current collector 28 were in contact with the protruding positive electrode edge portion 32, and welds were thereby formed. In this manner, the protruding positive electrode edge portion 32 of the positive electrode 6 was welded to the positive electrode current collector 28.

Next, an alkaline electrolyte that was an aqueous solution containing an alkali metal hydroxide as a solute and saturated with zinc oxide was prepared, and 4.336 g of the alkaline electrolyte was poured into the exterior can 2. In the alkaline electrolyte, the molar mixing ratio of KOH, NaOH, and LiOH is KOH : NaOH : LiOH = 6:0:0.5, and the total normality is 6.5N.

Next, as indicated by the arrow A in FIG. 4, the current collecting lead 34 was inserted into the exterior can 2 and placed on the positive electrode current collector 28.

In a separate step, the sealing member 14 was prepared. In the sealing member 14 prepared, the ring-shaped insulating gasket 18 was fitted to the circumferential edge of the lid plate 16 in advance. Then the sealing member 14 with the insulating gasket 18 attached thereto was fitted to the opening edge 17 of the exterior can 2 and placed on the current collecting lead 34 as indicated by the arrow A in FIG. 4.

With the positive electrode current collector 28, the current collecting lead 34, and the sealing member 14 in contact with each other as described above, a current was caused to flow to perform projection welding while the sealing member 14 and the positive electrode current collector 28 were pressurized in a direction in which they approached each other.

In this state, the lid plate 16 of the sealing member 14 was located at the upper end opening of the exterior can 2 with the insulating gasket 18 interposed therebetween. With this state maintained, the opening edge 17 of the circumferential wall 39 of the exterior can 2 was crimped at a position in a prescribed range from the opening 3 to close the opening of the exterior can 2 with the sealing member 14, and a 4/3FA size battery 1 with a battery capacity of 1600 mAh was thereby assembled.

(COMPARATIVE EXAMPLE 1)

A nickel-zinc secondary battery was produced using the same procedure as in Example 1 except that a negative electrode current collector was resistance-welded to the protruding negative electrode edge portion 12 and that the negative electrode current collector was resistance-welded to the bottom wall inner surface 92 of the exterior can 2. The negative electrode current collector was formed using the same material as that of the positive electrode current collector 28 and had the same shape as the positive electrode current collector 28 except that the diameter was changed to 16.0 mm.

(COMPARATIVE EXAMPLE 2)

A nickel-zinc secondary battery was produced using the same procedure as in Example 1 except that a conventional positive electrode ribbon was used instead of the current collecting lead to electrically connect the sealing member 14 to the positive electrode current collector 28.

2. Evaluation of nickel-zinc secondary batteries

(1) Pretreatment

(i) Aging

Each of the obtained batteries 1 was aged, i.e., left to stand in a 25°C environment for 12 hours.

(ii) Activation

The aged battery 1 was subjected to a charging-discharging procedure. Specifically, the battery 1 was charged at a charging current of 0.1C for 12.5 hours in an environment at a temperature of 25°C and allowed to rest for 15 minutes. After the rest for 15 minutes, the battery 1 was discharged at a discharge current of 0.2C until the battery voltage reached 1.3 V. After the discharging, the battery 1 was allowed to rest for 15 minutes. Note that 1C = 1600 mA. The same applies to the following.

(iii) Break-in charging/discharging

In an environment at a temperature of 25°C, the activated battery 1 was charged at a charging current of 0.6C for 1 hour, charged at a charging current of 0.3C for 1 hour, charged at a charging current of 0.1C for 1 hour, and allowed to rest for 15 minutes. After the rest for 15 minutes, the battery 1 was discharged at a discharge current of 0.5C until the battery voltage reached 1.3 V. After the discharging, the battery 1 was allowed to rest for 15 minutes. This charging-discharging procedure was defined as one cycle, and the charging-discharging cycle was repeated twice.

The pretreatment including a series of operations (i) the aging, (ii) the activation, and (iii) the break-in charging/discharging was performed to bring the battery 1 to a usable state.

The pretreated batteries in Example 1 and Comparative Example 1 were used to determine charge-discharge curves using the relation between the capacity and voltage. The results showed that the charge-discharge curves coincided with each other irrespective of the presence or absence of the negative electrode current collector. For each of the pretreated batteries in Example 1 and Comparative Example 1, the open circuit voltage (OCV), the discharge capacity, and the AC resistance were measured before and after the break-in charging/discharging. The results showed that these values were equivalent irrespective of the presence or absence of the negative electrode current collector.

(2) Various tests

Two batteries were produced under the conditions of each of Example 1 and Comparative Example 1. Various tests were performed on these two batteries, and the average values of the obtained test results were used to evaluate the batteries.

(i) Discharge rate test

For each of the pretreated batteries 1, the battery voltage, the battery temperature, and the discharge capacity were determined while the discharge current conditions were varied. The results showed that the discharge curves substantially coincided with each other at all discharge rates irrespective of the presence or absence of the negative electrode current collector, and the results were equivalent irrespective of the presence or absence of the negative electrode current collector.

(ii) Self-discharge test

For each of the pretreated batteries 1 in Example 1 and Comparative Example 1, constant voltage and constant current (CCCV) charging was performed in a 25°C environment with an upper limit current set to 0.5C, an upper limit voltage set to 1.9 V, and a charging capacity limit set to the nominal capacity (1600 mA). In this case, the state of charge (hereinafter referred to also as SOC) was set to 100%. Then the battery 1 was allowed to rest for 15 minutes, and constant current (CC) discharging was performed at 0.5C until the battery voltage reached 1.3 V to determine the initial capacity.

Next, the battery 1 was allowed to rest for 15 minutes, and CCCV discharge was performed with an upper limit current set to 0.5C, an upper limit voltage set to 1.9 V, and a charging capacity limit set to the nominal capacity (1600 mA). In this case, the SOC was set to 100%.

Next, the battery was left to stand in a 35°C environment for 2 weeks, and CC discharging was again performed at 0.5C in a room temperature environment at 25°C until the battery voltage reached 1.3 V to determine the remaining capacity after the battery was left to stand for 2 weeks.

The above procedure was repeated except that the period of time the battery was left to stand was changed from 2 weeks to 2 months, and the initial capacity and the remaining capacity (the remaining capacity after the battery was left to stand for 2 months) were determined.

Next, the remaining ratio R was determined from the following formula (I). The results obtained are shown in Table 1.

$$R \; [\%] \; = \; (\text{remaining capacity} \; / \; \text{initial capacity}) \; \times \; 100 \quad (I)$$

The larger the value of the remaining ratio R, the larger the reaming capacity of the battery, indicating that self-discharge was reduced.

The self-discharge rate was determined using the following formula (II). The results obtained are shown in Table 2.

Self-discharge rate [SOC% / day] = (initial capacity - remaining capacity) / rated capacity / number of days battery was left to stand $\qquad$ (II)

The smaller the value of the self-discharge rate, the slower the progress of the self-discharge, indicating that the self-discharge was reduced.

[Table 1]

[Table 1]

| | | | Com parative Example 1 | Example 1 |
|---|---|---|---|---|
| Presence or absence of welding of positive electrode current collector | | | Yes | Yes |
| Presence or absence of negative electrode current collector | | | Yes | No |
| Method for current collection between bottom wall of exterior can and negative electrode-side edge portion of electrode group | | | Welding of negative electrode current collector | Contact current collection |
| Battery capacity | | | 1600 | 1600 |
| 35°C, 2 weeks 14 days | Initial capacity [mAh] | | 1583 | 1584 |
| | Remaining capacity [mAh] | | 1308 | 1338 |
| | Remaining ratio (%) | | 82.6 | 84.5 |
| | Self-discharge rate (SOC%/day) | | 1.23 | 1.10 |
| 35°C, 2 months 60 days | Initial capacity [mAh] | | 1584 | 1583 |
| | Remaining capacity [mAh] | | 839 | 940 |
| | Remaining ratio (%) | | 52.9 | 59.4 |
| | Self-discharge rate (SOC%/day) | | 0.78 | 0.67 |

The results showed that the remaining ratio after the battery was left to stand was higher when the negative electrode current collector was not provided than when the negative electrode current collector was provided.

This may be because, when the negative electrode current collector was not welded, the base metal was not exposed at the welds and the self-discharge due to the local cell reaction was reduced.

(iii) Drop test

Each of the batteries in Example 1 and Comparative Example 2 was allowed to free-fall vertically from a height of 30 cm from the surface of a floor with the positive electrode terminal downward so as to come into collision with the surface of the floor.

Next, the AC resistance of each dropped battery was measured.

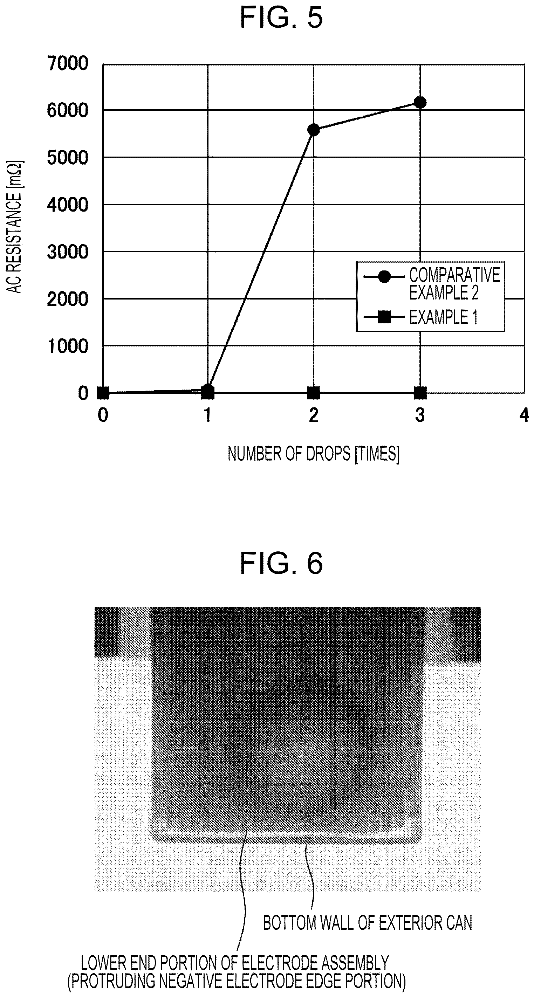

Then the dropping and the measurement of the AC resistance were repeated. The relation between the number of drops and the AC resistance value is shown in a graph in FIG. 5.

As can be seen from the results in FIG. 5, the AC resistance increased steeply at the second drop in Comparative Example 2. However, in Example 1, no steep increase in the AC resistance was found even after the third drop.

FIG. 6 shows a CT image of the battery in Comparative Example 2 at the second drop. It was found that a gap was formed between the lower edge portion (protruding negative electrode edge portion) of the electrode group and the bottom wall of the exterior can, so that the contact was broken. This indicates that the steep increase in the AC resistance in Comparative Example 2 using the conventional positive electrode ribbon may be due to the break in contact between the electrode group and the bottom wall of the exterior can caused by the drop. However, in Example 1 using the current collecting lead, no steep increase in the AC resistance was found. This indicates that the contact between the electrode group and the bottom wall of the exterior was not broken even after the third drop, and the contact stability is higher than that in Comparative Example 2.

(3) Discussion

The self-discharge characteristics were improved by omitting the negative electrode current collector, i.e., because no negative electrode current collector was welded to the bottom wall of the exterior can. This may be due to the following reason. Since welds at which the base metal (such as Ni or Fe) can be exposed are not formed, the occurrence of the local cell reaction is reduced.

As described above, the negative electrode is disposed so as to be exposed at the outermost circumferential surface of the electrode group. The negative electrode is thereby in direct contact with the side wall inner circumferential surface of the exterior can, and the protruding negative electrode edge portion is in direct contact with the inner surface of the bottom wall of the exterior can. In this manner the self-discharge characteristics can be improved while the dischargeability is maintained.

The present invention is not limited to the embodiment and Example described above, and various modifications can be made. For example, in the embodiment described above, the nickel-zinc secondary battery has been described, but the present invention is not limited to this mode. No limitation is imposed on the type of battery, and other zinc secondary batteries and zinc primary batteries can be used so long as they are batteries that use zinc as the negative electrode active material.

In the present invention, no particular limitation is imposed on the size of the battery. Other sizes such as the FA size and the AA size may be used.

Reference Signs List

1     nickel-zinc secondary battery
2     exterior can
4     electrode group
6     positive electrode
8     negative electrode
10    separator
12    protruding negative electrode edge portion
28    positive electrode current collector
32    protruding positive electrode edge portion
34    current collecting lead

**Claims**

1. A zinc battery comprising:

   a closed-end cylindrical can having an opening at an upper end thereof and serving also as a negative electrode terminal;
   an electrode group that, together with an alkaline electrolyte, is housed in the can; and
   a sealing member that includes a positive electrode terminal and a sealing plate electrically connected to the positive electrode terminal, the sealing plate having a portion that is fitted into the opening to seal the opening,
   wherein the electrode group is formed by winding a positive electrode and a negative electrode stacked together with a separator interposed therebetween into a spiral shape and has a columnar overall shape,

wherein the negative electrode includes a negative electrode substrate and a negative electrode mixture held in the negative electrode substrate,

wherein the negative electrode mixture contains at least one of zinc, a zinc alloy, and a zinc-containing compound, wherein a protruding negative electrode edge portion that is a partially protruding portion of the negative electrode is located at a lower end surface portion of the electrode group that is located on a bottom side of the can, and wherein the protruding negative electrode edge portion is in direct contact with an inner surface of a bottom of the can.

2. The zinc battery according to claim 1, wherein the protruding negative electrode edge portion is in direct contact with the inner surface of the bottom of the can while urged toward the inner surface of the bottom of the can.

3. The zinc battery according to claim 1 or 2, wherein a protruding positive electrode edge portion that is a partially protruding portion of the positive electrode is located at an upper end surface portion of the electrode group that is located on an opening side of the can,

wherein a disk-shaped positive electrode current collector is electrically connected to the protruding positive electrode edge portion,

wherein a current collecting lead that electrically connects the positive electrode current collector to the sealing plate is disposed between the positive electrode current collector and the sealing member, and

wherein the current collecting lead has a top wall located on a sealing member side, a bottom wall facing the top wall and located on a positive electrode current collector side, and a pair of side walls facing each other and extending between respective side edges of the top wall and respective side edges of the bottom wall, the current collecting lead being disposed while compressed between the sealing plate and the positive electrode current collector, the current collecting lead urging the electrode group toward the bottom of the can.

4. The zinc battery according to any of claims 1 to 3, wherein the negative electrode substrate includes a core formed of a metallic electric conductor and a surface layer that covers the core and is composed mainly of tin.

5. The zinc battery according to any of claims 1 to 4, wherein the can is formed of a multi-layer plated steel sheet prepared by plating a nickel-plated steel sheet further with tin.

# FIG. 1

FIG. 2

FIG. 3

# FIG. 4

# FIG. 5

# FIG. 6

BOTTOM WALL OF EXTERIOR CAN

LOWER END PORTION OF ELECTRODE ASSEMBLY
(PROTRUDING NEGATIVE ELECTRODE EDGE PORTION)

| INTERNATIONAL SEARCH REPORT | International application No. |
|---|---|
| | **PCT/JP2023/003525** |

**A. CLASSIFICATION OF SUBJECT MATTER**

*H01M 10/28*(2006.01)i; *H01M 4/24*(2006.01)i; *H01M 4/66*(2006.01)i; *H01M 50/107*(2021.01)i; *H01M 50/119*(2021.01)i; *H01M 50/128*(2021.01)i; *H01M 50/152*(2021.01)i; *H01M 50/531*(2021.01)i; *H01M 50/533*(2021.01)i; *H01M 50/545*(2021.01)i; *H01M 50/56*(2021.01)i; *H01M 50/562*(2021.01)i

FI: H01M10/28 A; H01M4/24 H; H01M4/66 A; H01M50/107; H01M50/119; H01M50/128; H01M50/152; H01M50/531; H01M50/533; H01M50/545; H01M50/56; H01M50/562

According to International Patent Classification (IPC) or to both national classification and IPC

**B. FIELDS SEARCHED**

Minimum documentation searched (classification system followed by classification symbols)

H01M4/00-62, H01M10/06-34, H01M50/10-198, H01M50/50-598

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2000-243433 A (MATSUSHITA ELECTRIC INDUSTRIAL CO., LTD.) 08 September 2000 (2000-09-08) claims, fig. 1-2 | 1 |
| Y | claims, fig. 1-2 | 2-5 |
| Y | JP 2018-125089 A (FDK CORP) 09 August 2018 (2018-08-09) claims, paragraph [0074] | 2-3 |
| Y | JP 2019-139986 A (HITACHI CHEMICAL CO LTD) 22 August 2019 (2019-08-22) paragraph [0034] | 4 |
| Y | JP 2018-160387 A (PANASONIC IP MAN CORP) 11 October 2018 (2018-10-11) paragraphs [0014], [0021] | 5 |
| A | JP 3-34256 A (SHIN KOBE ELECTRIC MACH CO LTD) 14 February 1991 (1991-02-14) fig. 1-3 | 1-5 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 March 2023** | **11 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2023/003525**

| Patent document cited in search report | | | Publication date (day/month/year) | Patent family member(s) | Publication date (day/month/year) |
|---|---|---|---|---|---|
| JP | 2000-243433 | A | 08 September 2000 | (Family: none) | |
| JP | 2018-125089 | A | 09 August 2018 | US 2018/0219206 A1<br>claims, paragraph [0097]<br>EP 3355382 A1<br>CN 108376758 A | |
| JP | 2019-139986 | A | 22 August 2019 | (Family: none) | |
| JP | 2018-160387 | A | 11 October 2018 | (Family: none) | |
| JP | 3-34256 | A | 14 February 1991 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11026013 A
- JP 2019139986 A